(19) Europäisches Patentamt
European Patent Office
Office européen des brevets

(11) **EP 3 692 437 B1**

(12) **EUROPEAN PATENT SPECIFICATION**

(45) Date of publication and mention
of the grant of the patent:
**28.09.2022 Bulletin 2022/39**

(51) International Patent Classification (IPC):
**G06F 7/14** *(2006.01)*    **G06F 17/40** *(2006.01)*
**G06F 11/34** *(2006.01)*    **G06F 11/30** *(2006.01)*

(21) Application number: **17927954.2**

(52) Cooperative Patent Classification (CPC):
**G06F 11/3006; G06F 7/14; G06F 11/3051;**
**G06F 11/3442; G06F 11/3447; G06F 11/3452**

(22) Date of filing: **05.10.2017**

(86) International application number:
**PCT/US2017/055275**

(87) International publication number:
**WO 2019/070269 (11.04.2019 Gazette 2019/15)**

(54) **SELECTING COMPUTER CONFIGURATIONS BASED ON APPLICATION USAGE-BASED CLUSTERING**

AUSWAHL VON COMPUTERKONFIGURATIONEN AUF BASIS VON ANWENDUNGSNUTZUNGSBASIERTEM CLUSTERING

SÉLECTION DE CONFIGURATIONS D'ORDINATEURS EN FONCTION D'UN REGROUPEMENT FONDÉ SUR L'UTILISATION D'APPLICATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.08.2020 Bulletin 2020/33**

(73) Proprietor: **Hewlett-Packard Development Company, L.P.**
**Spring, TX 77389 (US)**

(72) Inventors:
• **BOAZ COSTA LEITE, Nailson**
**90619-900 Porto Alegre (Rio Grande do Sul) (BR)**
• **MARCHEZI, Humberto C.**
**Sandymount, Dublin 4 (IE)**
• **TANI, Brian S.**
**90619-900 Porto Alegre (Rio Grande do Sul) (BR)**
• **ALVES, Luciano**
**90619-900 Porto Alegre (Rio Grande do Sul) (BR)**

(74) Representative: **Haseltine Lake Kempner LLP**
**Redcliff Quay**
**120 Redcliff Street**
**Bristol BS1 6HU (GB)**

(56) References cited:
WO-A1-2017/039627    US-A1- 2009 198 482
US-A1- 2013 318 520    US-A1- 2014 351 412
US-A1- 2016 042 285    US-B1- 7 917 954

**Description**

Background

Different computer models associated with different computer configurations may vary greatly in performance capabilities and price. Various factors associated with a given user, such as the user's budget and intended uses for a computer, may affect which particular configuration may be best suited for the user.
US 2014/0351412 discloses determining and monitoring performance capabilities of a computer resource service.
WO 2017/039627 discloses a method and an apparatus to manage information technology infrastructure based on application characteristics.
US 2016/0042285 discloses a system and a method for analyzing and prioritizing changes and differences to configuration parameters in information technology systems.
US 7917954 discloses systems and methods for policy-based program configuration.

Brief Description Of The Drawings

Fig. 1 is a schematic diagram of a system to provide an output selecting a computer configuration based on an application profile and application usage-based clustering according to an example implementation.

Fig. 2 is an illustration of application usage-based clustering according to an example implementation.

Fig. 3 is an illustration of a process to generate computer configuration rankings for application clusters according to an example implementation.

Fig. 4 is an illustration of the merger of the computer configuration rankings of Fig. 3 based on an application profile to generate a first merged computer configuration ranking according to an example implementation.

Fig. 5 depicts a budget filter according to an example implementation.

Fig. 6 is an illustration of the merger of the first merged computer configuration ranking of Fig. 4 with a budget-based computer configuration ranking to generate a second merged computer configuration ranking according to an example implementation.

Fig. 7 is an illustration of a graphical user interface (GUI) to select a computer configuration according to an example implementation.

Fig. 8 is a flow diagram depicting a technique to select a computer configuration based on application usage-based clustering according to an example implementation.

Fig. 9 is an illustration of machine readable instructions executable by a machine and stored on a non-transitory machine readable storage medium to select a computer model based on application usage-based clustering according to an example implementation.

Fig. 10 is a schematic diagram of an apparatus to select a computer model for a user based on application usage-based clustering according to an example implementation.

Detailed Description

Due to the large number of available configuration options for a computer, it may be challenging for a particular user (an enterprise, a business unit of an enterprise, or an individual, as examples) to select a computer to adequately meet the user's usage criteria for the computer. In this context, a "configuration option" for a computer refers to an option that may define one or multiple characteristics of the computer, such as any of a number of the foregoing characteristics as well as other characteristics: a number of central processing units (CPUs), a number of CPU processing cores, a CPU technology, a volatile memory capacity, a memory technology, a storage capacity, a storage technology, the storage bandwidth, a storage latency, a memory latency, and so forth. As examples, a particular computer configuration may refer to a particular computer model; a particular computer model having one or multiple selected options; a computer provided by a certain manufacturer and having a set of one or multiple configuration options, with no association with a particular model; a computer with certain configuration options and no affiliation with a particular manufacturer, and so forth.

In the context of this application, the "computer" may be, in general, any processor-based platform, such as, as examples, a desktop computer, a laptop computer, a tablet computer, a smartphone, a wearable device (a watch, for example), a client, a server, a thin client, and so forth.

Due to the wide range of options and uses for a computer, it is entirely possible that a user may select a computer configuration that is not optimally utilized for the user's purposes. For example, the user may select a computer configuration that, when used by user, may have a CPU usage that is consistently high (over 70 percent, for example), which may indicate that the computer is underpowered and may result in the user experiencing significant delays in the computer's responses to input, as well as other challenges. Conversely, the user may select a computer configuration that may have under-utilized resources, which may mean, for example, that the purchase of the computer was not economically efficient.

In accordance with the invention, it is provided a method as defined in the appended independent claim 1, a computer program product as defined in the appended independent claim 9 and an apparatus as defined in the appended independent claim 13. Preferred embodiments of the invention are defined in the appended dependent claims. Disclosed herein is a computer system that selects a computer configuration based on application usage-based clustering and an application profile. As described herein, the "application profile" refers to an input that may be provided by a user to define the user's application use for the computer. As an example, in accordance with some implementations, the application profile may include a list of applications to be executed on the computer; and in accordance with example implementations, the application profile may indicate a rank, or order, of the applications to indicate preferences for the applications (one application may be designated as being the top priority application, meaning the application may be used more or may be more important to the user than the other applications, for example; another application may be designated as being the second application in terms of priority; and so forth).

The "application usage-based clustering" refers to the grouping of a relatively large set of candidate applications (i.e., a set of applications larger than the list of applications of a given application profile) based on usage metrics that are observed when the candidate applications execute on a set of candidate computer configurations (candidate computer models, for example). Due to this grouping, applications that are associated with similar usage metrics are grouped together. For example, candidate applications that have relatively high memory and relatively high CPU usage may be grouped together in one cluster; candidate applications that have relatively high memory usage and relatively lower CPU usage may be grouped together in another cluster; candidate applications that have a relatively larger storage usage may be grouped together in another cluster; and so forth.

A given candidate application may be executed on one or multiple candidate computer configurations; and a given candidate computer configuration may execute one or multiple candidate applications. As described herein, in accordance with example implementations, when a candidate computer configuration executes a certain percentage of applications of a given application cluster, then the candidate computer configuration represents the cluster. Accordingly, each application cluster may be represented by one or multiple candidate computer configurations. In accordance with example implementations, the candidate computer configurations that represent each application clusters are ranked based on a "fit" between the configurations and the cluster. For example, a statistical distribution of a particular usage metric for a candidate computer configuration may be compared to the statistical distribution of the same usage metric for the application cluster for purposes of assessing the fit. Accordingly, the computer system determines a ranking of computer configurations for each application cluster. Thus, each application cluster is a group of candidate applications that have similar observed usage metrics; each application cluster may be represented by one or multiple candidate computer configurations; and for each application cluster, the candidate computer configurations representing the application cluster are be ranked.

In accordance with example implementations that are described herein, the application profile controls a selection of application clusters and the merging of the rankings associated with the selected application clusters to provide a first merged ranking of computer configurations. In accordance with some implementations, the highest ranked computer configuration of the first merged computer ranking may be the configuration that is selected, or recommended, for the user. However, in accordance with further example implementations, the computer configuration selection may also take into account a budget, or price range that is provided by the user. In this manner, in accordance with some implementations, a budget-based ranking of the computer configurations listed in the application profile may be determined; and then, the budget-based computer configuration ranking may be merged with the above-described first merged computer ranking to produce a second, merged computer ranking. Accordingly, the second merged computer ranking may provide in an ordered list of computer configurations, with the highest ranked computer configuration having a reasonable utility within an allocated budget, in accordance with example implementations.

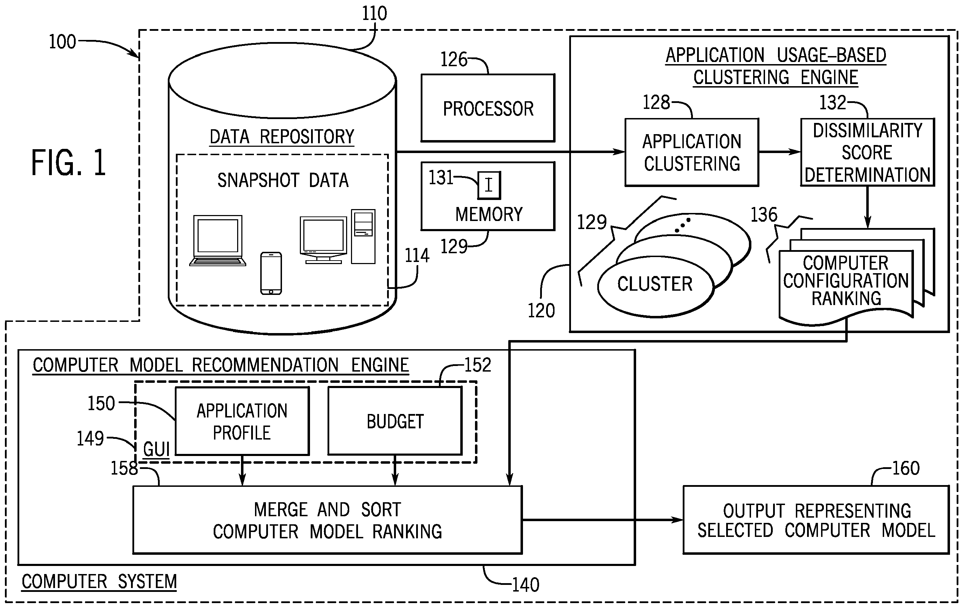

As a more specific example, Fig. 1 depicts a computer system 100 to recommend, or select, a computer configuration based on application usage-based clustering and an application profile. Referring to Fig. 1, the computer system 100 may include one or multiple processors 126 (one or multiple CPUs, one or multiple CPU cores, and so forth). Moreover, the processor(s) 126 may execute machine executable instructions 131, which are stored in a non-transitory memory 129, for purposes of performing one or multiple functions of the computer system 100, as described herein. In accordance with example implementations, the non-transitory memory 129 may include semiconductor storage devices, memristor-based storage devices, phase change memory devices, volatile memory devices, non-volatile memory devices, storage devices associated with other storage technologies, a combination of storage devices associated with one or more of the foregoing storage technologies, and so forth.

In accordance with further example implementations, the computer system 100 may be formed partially or in whole from one or multiple circuits that do not execute machine executable instructions. In accordance with further example implementations, such circuits may include, as examples, application specific integrated circuits (ASICs), field programmable gate arrays (FPGAs), and so forth.

It is noted that the computer system 100 may be disposed at a single geographical location or may be formed form networked components that are located at multiple geographical locations.

In accordance with example implementations, the computer system 100 provides an output 160 that represents a selected computer configuration for a user based on application usage-based clustering and input from the user. The user input may include data representing an application profile 150 and a budget 152 for the tobe-selected computer configuration. A computer configuration recommendation engine 140 of the computer system 100, as described herein, may take into account the application profile 150, the budget 152 and computer configuration rankings 136 for purposes of providing the output 160 representing the selected computer configuration.

The computer configuration rankings 136, in accordance with example implementations, are rankings of a relatively large set of candidate computer configurations; and these rankings 136 are determined by an application usage-based clustering engine 120 of the computer system 100 based on application usage metrics. More specifically, in accordance with example implementations, the computer system 100 includes a data repository 110, which contains application snapshot data 114 that represents various application usage metrics. In this regard, in accordance with example implementations, the snapshot data 114 represents observed snapshots of candidate applications that execute on a set of computers that are associated with the set of candidate computer configurations, and the snapshot data 114 may be collected by snapshot collection programs. A given application snapshot, in general, is associated with a candidate computer configuration and a candidate application (i.e., derived due to the candidate application executing on the candidate computer configuration); and the snapshot data 114 for the snapshot may include, an application identification; the identification of the computer configuration executing the application (an identification of a computer model number assigned by the computer system 100, for example); and various usage metrics associated with the application execution. As examples, the usage metrics may belong to one or more of the following categories: CPU usage; memory usage; storage usage, and so forth. In accordance with example implementations, the snapshot data 114 may be acquired on multiple machines that belong to different users and are disposed at different geographical locations; and the snapshot data 114 may be sanitized so that the application snapshot data 114 does not contain any identifiable personal information.

The application usage-based clustering engine 120 analyzes the application snapshot data 114 for purposes of generating, or providing, the computer configuration rankings 136. More specifically, the application usage-based clustering engine 120 performs application clustering 128 to group, or cluster, the candidate applications based on the usage metrics so that the candidate applications of a particular cluster have at least some similar usage metrics (from a statistical standpoint); and in accordance with example implementations, the application usage-based clustering engine 120 may aggregate the candidate applications based on the usage metrics (as represented by the application snapshot data 114) before the clustering, using a statistical analysis. For example, in accordance with example implementations, the application usage-based clustering engine 120 may determine a mean and a standard deviation for each usage metric category for each candidate application; or, as another example, the application usage-based clustering engine 120 may determine a median and mean absolute deviation for each usage metric category for each candidate application. This aggregation is performed so that the particular variations that may arise from different circumstances may be controlled as per the Central Limit Theorem (in other words, in accordance with some implementations, the usage metrics for a given usage metric category may be assumed to have a normal, or Gaussian distribution). The application usage-based clustering engine 120 may then use the aggregated application usage metrics as features for a clustering algorithm (a K-means clustering algorithm, a self organizing map (SOM) clustering algorithm, and so forth) to generate application clusters 129.

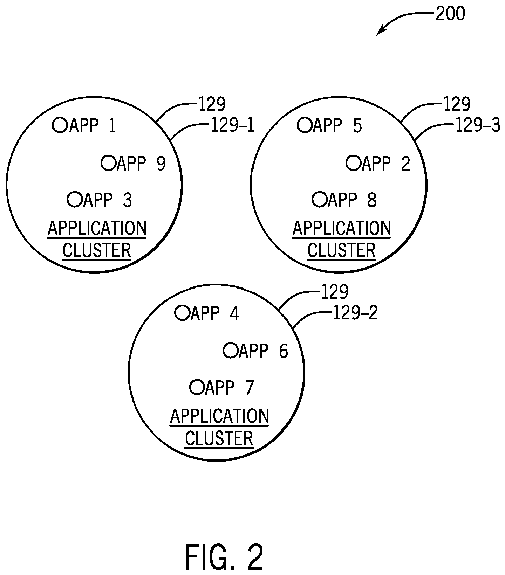

Referring to Fig. 2 in conjunction with Fig. 1, as an example, the application clustering 128 may generate clusters 129-1, 129-2 and 129-3. The applications within a given application cluster 129 may have similar observed usages for at least one usage category. For the specific example of Fig. 2, the application cluster 129-1 contains an Application 1, an Application 3 and an Application 9; the application cluster 129-2 contains an Application 4, an Application 6 and an Application 7; and the application cluster 129-3 contains an Application 5 and an Application 8.

Referring back to Fig. 1, the application usage-based clustering engine 120 may next determine how well a particular computer configuration is represented by a given application cluster 129, given a minimum data application coverage. For example, in accordance with example implementations, the application usage-based clustering engine 120 may apply a predetermined threshold for purposes of determining whether a given computer configuration is represented by a particular application cluster 129. For example, the threshold may be 0.75, which means that at least seventy-five percent of the applications in the cluster 129 are executed by a given computer configuration for the computer configuration to be considered to be represented by the cluster 129. That is, an application ratio of 0.75 exists for a given computer configuration, otherwise, the computer configuration is not deemed to be represented by the cluster 129. Other criteria may be used for purposes of determining whether a particular computer configuration is represented by a given application cluster 129, in accordance with further example implementations.

Thus, the application usage-based clustering engine 120 determines, for each application cluster 129, a set of computer configurations that are represented by the application cluster 210.

After determining which computer configurations are represented by the application clusters 210, in accordance with example implementations, the application usage-based clustering engine 120 determines dissimilarity scores, as indicated at reference numeral 132 of Fig. 1. In this manner, in accordance with example implementations, the application usage-based clustering engine 120 calculates, or determines, a dissimilarity score for each computer configuration represented by a given application cluster 210. In accordance with example implementations, the dissimilarity score represents how well usage metrics observed for a particular computer configuration statistically fits the usage metrics observed for an application cluster 129. In accordance with example implementations, the lower the dissimilarity score, the better the computer configuration fits the application cluster 129.

As a more specific example, in accordance with some implementations, the dissimilarity score may be based on z-test statistics. The z-test statistic is a measure of the similarity of the distribution of a particular usage metric for an application cluster to the distribution of the usage metric for a computer configuration. More specifically, the z-test statistic may take into account the mean and standard deviation of the data collected:

$$Z = \frac{(\overline{X}_1 - \overline{X}_2)}{\sqrt{\sigma_{x_1}^2 + \sigma_{x_2}^2}} , \qquad \text{Eq. 1}$$

where "Z" represents the z-statistic for a particular usage metric category, "$\overline{X}_1 - \overline{X}_2$" represents the difference in means;

and "$\sqrt{\sigma_{x_1}^2 + \sigma_{x_2}^2}$" represents the sum of the squares of the standard deviations.

The dissimilarity score, in accordance with example implementations, is the weighted sum of the absolute values of the z statistic for each aggregated usage metric, as described below:

$$F = \sum_{k=1}^{n} w_k \times |m_k| , \qquad \text{Eq. 2}$$

where "F" represents the dissimilarity score; "k" represents an index; "n" represents the number of usage metric categories; "m" represents the usage metric distribution comparison value, such as the z-test statistic; and "$w_k$" represents a weight assigned to the given metric category.

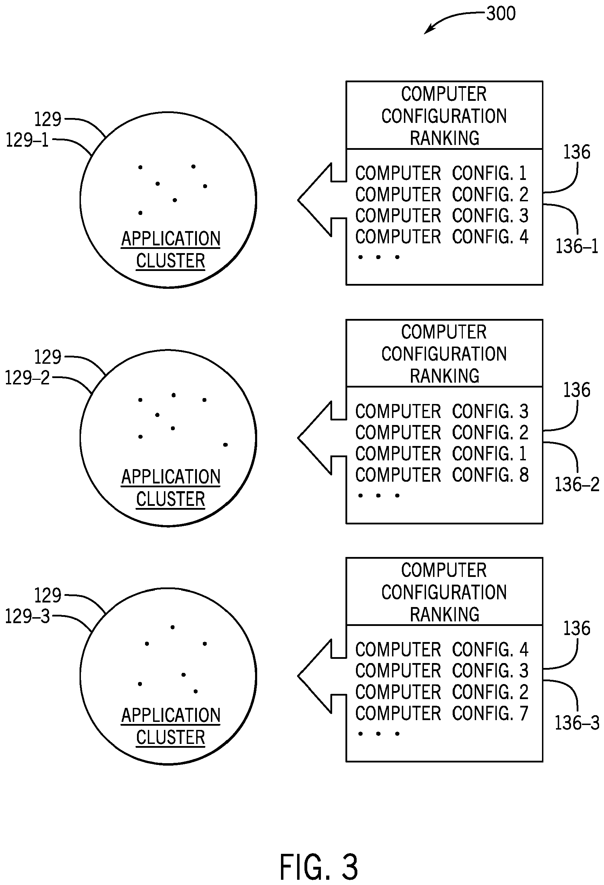

Referring to an illustration 300 of Fig. 3 in conjunction with Fig. 1, in accordance with some implementations, after determining the dissimilarity scores, the application usage-based clustering engine 120 determines a computer configuration ranking 136 (three example computer configuration rankings 136-1, 136-2 and 136-3 being depicted in Fig. 3) for each application cluster 129. In this manner, for the specific example depicted in Fig. 3, the application cluster 129-1 represents Computer Configuration 1, Computer Configuration 2, Computer Configuration 3 and Computer Configuration 4; the application cluster 129-2 represents Computer Configuration 3, Computer Configuration 2, Computer Configuration 1 and Computer Configuration 8; and the application cluster 129-3 represents Computer Configuration 4, Computer Configuration 3, Computer Configuration 2 and Computer Configuration 7. It is noted that for this example, four computer configurations are illustrated as being represented by each application cluster 129. It is understood, however, that a particular application cluster 129 may represent more than or fewer than four computer configurations. Moreover, in accordance with example implementations, the number of computer configurations per application cluster 129 may vary. For example, one application cluster 129 may represent ten computer configurations, whereas another application cluster 129 may represent seven computer configurations.

In accordance with example implementations, the application usage-based clustering engine 120 determines each computer configuration ranking 136 for each application cluster 129 based on the dissimilarity scores for the computer configurations that are represented by the cluster 129. In this manner, in Fig. 3, a computer configuration ranking 136-3 for the application cluster 129-3 orders, or ranks, the Computer Configurations 2, 3, 4 and 7 as follows: Computer Configuration 4, Computer Configuration 3, Computer Configuration 2 and Computer Configuration 7. In other words, for the computer configuration ranking 136-3, Computer Configuration 4 is the highest ranked computer configuration. Likewise, the application clusters 129-1 and 129-2 have associated configuration rankings 136-1 and 136-2, respectively.

Referring back to Fig. 1, the computer configuration rankings 136 are provided by the application usage-based clustering engine 120 to the computer configuration recommendation engine 140. The computer configuration recommendation engine 140 selects certain computer configuration rankings 136 based on applications that are identified in the application profile 150; and the application usage-based clustering engine 120 combines, or merges, the selected rankings 136 based on a priority of applications as indicated in the application profile 150.

More specifically, in accordance with example implementations, the computer configuration recommendation engine 140 receives data representing the application profile 150 and budget 152 (provided via a graphical user interface (GUI) 149, for example); and based on the application profile 150, the computer configuration recommendation engine 140 selects and assigns weights to the appropriate computer configuration rankings 136. For example, in accordance with example implementations, the computer configuration recommendation engine 140 may select the configuration rankings 136 that are associated with the applications listed in the application profile 150, and the engine 140 may assign weights to the selected rankings 136 that reflect the application ordering, as set forth in the profile 150.

In accordance with example implementations, the assigned weights may be based on a linear profile that is a function of the number of applications listed in the profile 150. For example, if the application profile 150 lists four applications, the computer configuration recommendation engine 140 may assign the weights using a linear spread from 1 to 0.25, resulting in weights of 1.00, 0.75, 0.50 and 0.25 being assigned to the associated computer rankings 136 in descending order.

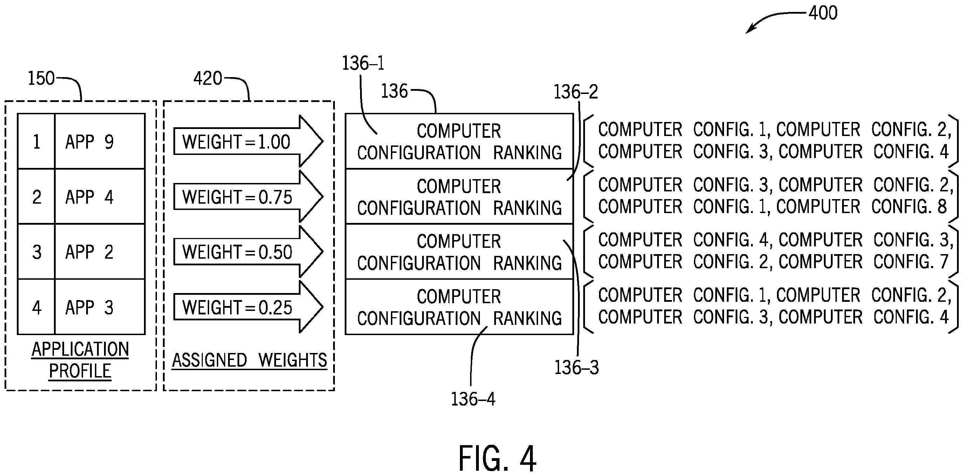

As a more specific example, referring to Fig. 4 in conjunction with Fig. 1, an illustration 400 depicts the weighting of the configuration rankings 136 according to an example application profile 150. For this example, the application profile 150 identifies and ranks four applications: Application 9 (the highest ranked application); Application 4 (the next highest ranked application); Application 2 (the next highest ranked application); and Application 3 (the lowest ranked application). The computer configuration recommendation engine 140 correspondingly selects and weights the computer configuration rankings 136 that correspond to the applications of the application profile 150 (as indicated at reference numeral 420). In this manner, for this example, the configuration ranking 136-1 corresponds to Application 9 and is assigned a weight of 1.00; the configuration ranking 136-2 corresponds to Application 4 and is assigned a weight of 0.75; the configuration ranking 136-3 corresponds to Application 2 and is assigned a weight of 0.50; and the configuration ranking 136-1 corresponds to Application 3 and is assigned a weight of 0.25. The computer configuration recommendation engine 140 may then merge the weighted computer configuration rankings, such as the weighted configuration rankings 136-1, 136-2 and 136-3 depicted in Fig. 4, for purposes of determining a first merged computer configuration ranking.

In accordance with some implementations, the first merged computer configuration ranking may be the final ranking, which then may be used by the computer configuration recommendation engine 140 to recommend a selected computer configuration (i.e., the highest ranked computer configuration) for the user. However, in accordance with further example implementations, the computer configuration recommendation engine 140 also considers the budget 152. More specifically, in accordance with some implementations, the user may provide a budget range. For example, there may be five candidate computer configurations having prices of $400, $500, $600, $700 and $800, respectively; and the budget specified by the user may be a budget in the range of $500 to $700, thereby excluding the $400 and $800 computer configurations from consideration.

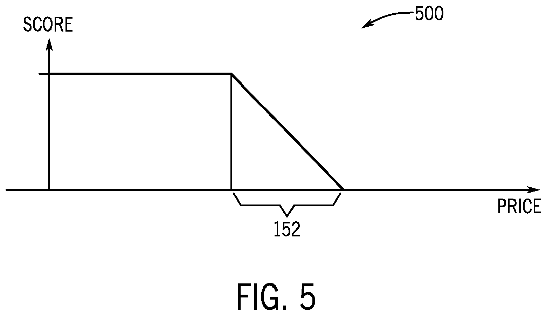

In accordance with example implementations, the computer configuration recommendation engine 140 may apply a price score curve (called a "budget filter" herein) based on the budget 152. More specifically, in accordance with some implementations, the computer configuration recommendation engine 140 may apply a budget filter 500, which is illustrated in Fig. 5. In this manner, referring to Fig. 5 in conjunction with Fig. 1, in accordance with example implementations, the user may define the budget 152 (i.e., a range of prices), and the computer configuration recommendation engine 140 may assign a certain weight, such as a weight of "1" to any computer configuration below the minimum of the budget 152 and another weight, such as a weight of "0" to any computer configuration above the maximum of the computer budget 510. For the example given above, with prices of $400, $500, $600, $700 and $800, the computer configuration recommendation engine 140 may assign weights of 1, 1, 0.5, 0 and 0, respectively using the budget filter 500 of Fig. 5. Other budget filters and weightings based on budget may be used, in accordance with further example implementations. Regardless of the particular filtering that is used, the computer configuration recommendation engine may apply some degree of weighting or filtering to the set of candidate computer configurations based on a user-specified budget to generate a budget-based ranked list of computer configurations.

The computer configuration recommendation engine 140 may then, as indicated at reference numeral 158 of Fig. 1, merge the first merged computer configuration ranking with the budget-based ranking to provide a second merged computer configuration ranking. In accordance with some implementations, the computer configuration recommendation engine 140 may, for example, apply a weighted rank aggregation technique, such as a cross-entropy or genetic algorithm, as well as other weighted rank aggregation methods.

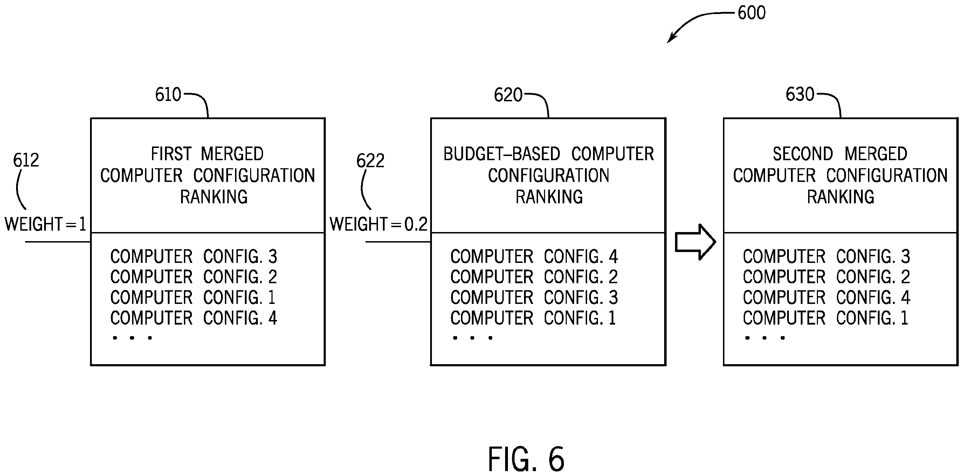

For example, in accordance with some implementations, as illustrated in Fig. 6, the computer configuration recommendation engine 140 may perform an aggregation 600 that involves assigning a particular weight 612 (a weight of "numeral 1", for example) to a first merged computer configuration ranking 610 (i.e., a ranking based on application usage clustering and the application profile 150) and assigning another weight (a lower weight, such as a weight of "0.2," for example) to a budget-based computer configuration ranking 620 to derive a second merged computer configuration ranking 630. The highest ranked computer configuration from the ranking 630, in turn, may be the computer configuration that is selected for the user.

As illustrated in Fig. 1, in accordance with some implementations, the computer configuration recommendation engine 140 provides data 160 that indicates the selected computer configuration. It is noted that the data 160 may indicate a single computer configuration, i.e., the top, or highest ranked, computer configuration, or may indicate more than one of the computers, depending on the particular implementation.

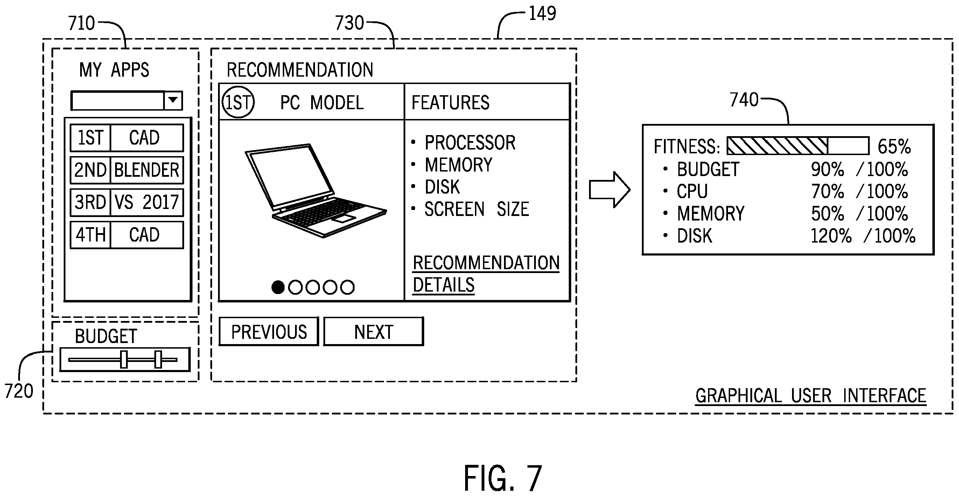

Referring to Fig. 7 in conjunction with Fig. 1, in accordance with some implementations, the GUI 149 may graphically indicate selection of a computer model (i.e, a computer configuration) for a given manufacturer and features associated with the selection. More specifically, in accordance with some implementations, the GUI 700 may be used to explain why a particular computer configuration was selected and recommended to the user. In this manner, the user may understand the ranking by looking at the percentages of performance metrics, such as CPU, memory and disks, as well as the budget. More specifically, as depicted in Fig. 7, the GUI 700 may, for example, may contain in an input section 710 in which the user may provide the application profile by selecting particular applications and ordering the applications. Moreover, the GUI 700 may contain a budget selection section 720 for purposes of indicating a particular budget (by sliding a graphical slide bar, for example). Based on the input, the GUI 700 may display a recommendation 730. In this regard, here, the recommendation is the first, or highest ranked computer configuration. But by selecting the Next button, the user may view the next selection; and correspondingly, the user may use the Previous button to traverse back to the top of the list.

The GUI 700 further includes, in accordance with example implementations, a fitness section 740 that lists the percentages of performance metrics and budget, such as here, performance metrics pertaining to the budget, CPU, memory and disk. In accordance with some implementations, these percentages may be the same used by the computer model recommendation engine 140 to measure the dissimilarity between the selected computer model and the corresponding application cluster for the usage metric categories. Moreover, a percentage more than 100 percent (such as the disk fitness of 120 percent Fig. 7) indicates that the selected computer model may do more than what is needed for the user (i.e., may indicate that the selected computer model is underutilized for the metric).

In accordance with further example implementations, the computer configuration recommendation engine 140 may provide an alternative result for a computer configuration regardless of budget so that the user may have an idea about what the ideal computer configuration may be and perhaps opt to purchase that model.

Among the potential advantages of the techniques and systems that are disclosed herein, computer configurations that are suitable to user needs may be determined; the profiles may avoid underperforming or over performing computer purchases. The use of the budget allows recommended computer configurations to fit user's needs. The fitness percentage allows the user to understand why the particular computer configuration was chosen.

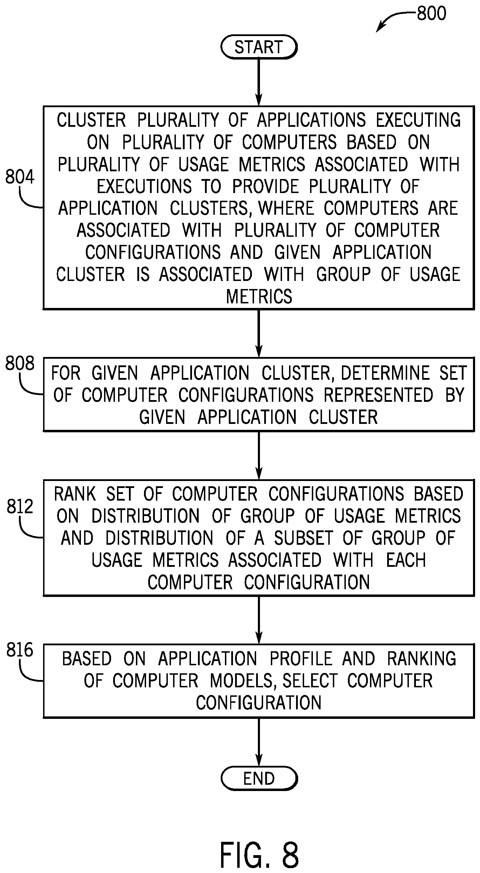

Thus, in accordance with example implementations, a technique 800 that is depicted in Fig. 8 may include clustering (block 804) a plurality of applications that are executed on a plurality of computers based on a plurality of usage metrics that are associated with the executions of the applications to provide a plurality of application clusters. The computers are associated with a plurality of computer configurations, and a given application cluster is associated with a group of the usage metrics. The technique 800 includes, for a given application cluster, determining (block 808) a set of computer configurations represented by the given application cluster. The technique 800 includes ranking (block 812) the set of computer configurations based on a distribution of the group of usage metrics and a distribution of a subset of the group of usage metrics associated with each computer configuration. The technique 800 includes selecting (block 816) a computer configuration based on an application profile and the ranking of the computer configurations.

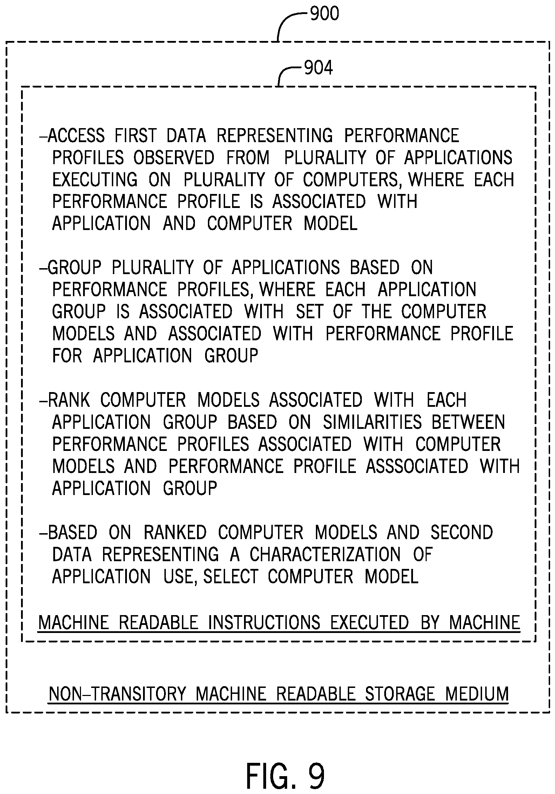

Referring to Fig. 9, more specifically, in accordance with some implementations, the computer configurations may be associated with computer models. A non-transitory machine readable storage medium 900 may store instructions 904 that may be executed by a machine. The instructions 904, when executed by the machine, may cause the machine to access first data representing performance profiles observed from a plurality of applications executing on a plurality of computers. Each performance profile may be associated with an application and a computer model. The instructions 904, when executed by the machine, cause the machine to group the plurality of applications based on the performance profiles, where each application group is associated with a set of the computer models and associated with a performance

EP 3 692 437 B1

profile for the application group. The instructions 904, when executed by the machine, cause the machine to rank the computer models associated with each application group based on similarities between the performance profiles associated with the computer models and the performance profile associated with the application group. The instructions 904, when executed by the machine, cause the machine to, based on the ranked computer models and second data representing a characterization of an application use, select a computer model.

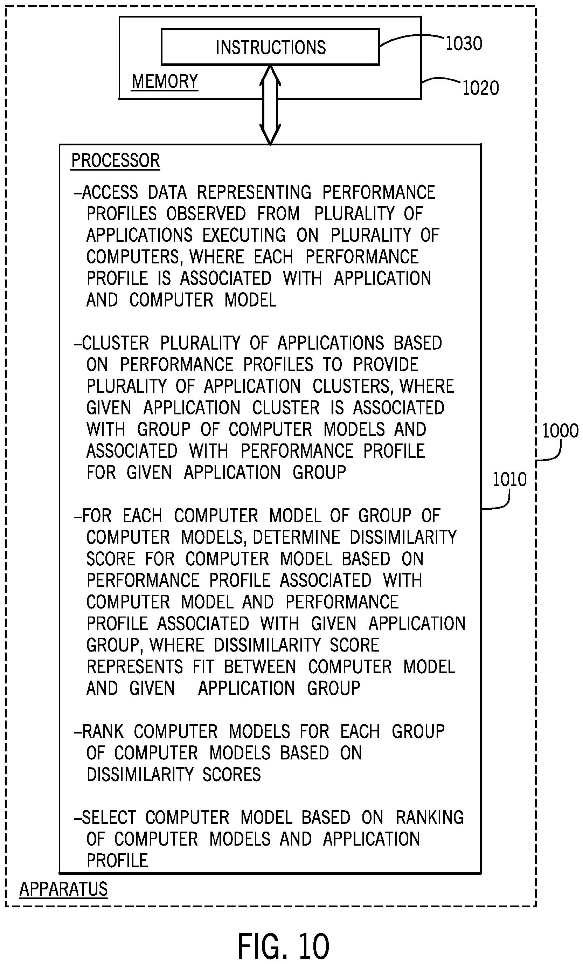

Referring to Fig. 10, in accordance with some implementations, an apparatus 1010 includes a processor and a memory 1020 to store instructions 1030 that, when executed by the processor 1010, cause the processor 1010 to access data representing performance profiles observed from a plurality of applications executed on a plurality of computers. Each performance profile is associated with an application and a computer model. The instructions, when executed by the processor, cause the processor to cluster the applications based on the performance profiles to provide a plurality of application clusters. A given application cluster is associated with a group of the computer models and associated with a performance profile for the given application group. The instructions, when executed by the processor, cause the processor to, for each computer model, determine a dissimilarity score for the computer model based on the performance profile associated with the computer model and the performance profile associated with the given application group. The dissimilarity score represents a fit between the computer model and the given application group. The instructions, when executed by the processor, cause the processor to, rank the computer models of the group of computer models based on the dissimilarity scores; and select a computer model based on the ranking and an application profile for the selected computer model.

Other implementations are contemplated, which are within the scope of the appended claims. For example, in accordance with further implementations, the computer configuration recommendation engine 140 may apply a price score curve that does not eliminate computer configurations that are outside of a budget from consideration. In this manner, referring back to Fig. 5, instead of applying a price score curve, such as the budget filter 500, which assigns a weight of zero to computer configurations above the upper end of the budget 152, the computer configuration recommendation 140 may assign a non-zero weight to these configurations, such as, for example, a weight that decays with price but remains above zero so that all of the computer configurations listed in the application profile 150 that are listed in the budget-based computer configuration ranking. As another variation, the price score may, in accordance with some implementations, may increase with price up to the lower end of the budget (instead of having a constant value one from a price of zero to the lower end of the budget 152, as depicted in Fig. 5, for example).

Therefore, in accordance with example implementations, all computer configurations listed in the application profile may appear in the budget-based computer configuration ranking. However, the order in which the computer configurations appear is a function of the budget. This allows, for example, a computer configuration that has a price below the budget to appear in the final ranking and depending on its application usage metrics, may possibly appear within the top ranked configurations. In a similar manner, a computer configuration that has a price above the budget may appear in the final ranking as one of the top-ranked configurations. Thus, in accordance with example implementations, the user can consider computer configurations that meet the usage criteria set forth in the application profile 150 but fall outside of the user-provided budget.

While the present disclosure has been described with respect to a limited number of implementations, those skilled in the art, having the benefit of this disclosure, will appreciate numerous modifications and variations therefrom.

## Claims

1.  A method (800) comprising:

    clustering (804) a plurality of applications executing on a plurality of computers based on a plurality of usage metrics associated with the executions of the applications to provide a plurality of application clusters, wherein the computers are associated with a plurality of computer configurations, and a given application cluster of the plurality of application clusters is associated with a group of the usage metrics;
    for a given application cluster of the plurality of application clusters, determining (808) a set of computer configurations of the plurality of computer configurations represented by the given application cluster;
    ranking (812) the set of computer configurations based on a distribution of the group of usage metrics and a distribution of a subset of the group of usage metrics associated with each computer configuration of the set of computer configurations; and
    based on an application profile and the ranking of the computer configurations, selecting (816) a computer configuration.

2.  The method (800) of claim 1, wherein the application profile comprises a list of applications of the plurality of applications to be used with the selected computer configuration.

8

**3.** The method (800) of claim 2, wherein:

the application profile indicates an ordering of the applications of the list; and
selecting the computer configuration comprises selecting the computer configuration based on the ordering.

**4.** The method (800) of claim 3, wherein selecting the computer configuration further comprises:

selecting application clusters of the plurality of application clusters which contain the applications of the list;
determining computer configuration rankings for each of the selected application clusters;
weighting the determined computer configuration rankings based on the ordering indicated by the application profile; and
combining the weighted determined computer configuration rankings.

**5.** The method (800) of claim 1, wherein ranking the set of computer configurations comprises:

for each computer configuration, determining a z-test statistic based on the distribution of the group of the usage metrics and the distribution of the subset of the usage metrics associated with the computer configuration; and
ranking the set of computer configurations based on the z-test statistic.

**6.** The method (800) of claim 1, wherein determining the set of computer configurations represented by the given application cluster comprises:

for a given computer configuration of the plurality of computer configurations, identifying a number of applications of the application cluster associated with the given computer configuration; and
determining whether the given computer configuration is represented by the given application cluster based on the number.

**7.** The method (800) of claim 1, wherein the usage metrics comprise metrics representing at least one of processor usage, memory usage or storage usage.

**8.** The method (800) of claim 1, wherein:

the plurality of computer configuration are associated with a range of prices; and
selecting the computer configuration further comprises selecting the computer configuration based on a selection of a subset of range of prices.

**9.** A non-transitory machine readable storage medium (900) to store instructions (904) that, when executed by a machine, cause the machine to:

access first data representing performance profiles observed from a plurality of applications executing on a plurality of computers, wherein each performance profile is associated with an application of the plurality of applications and a computer configuration of a plurality of computer configurations;
group the plurality of applications based on the performance profiles into application clusters, wherein each application cluster is associated with a set of the computer configurations and associated with a performance profile for the application cluster;
rank the computer configurations associated with each application cluster based on similarities between the performance profiles associated with the computer configurations and the performance profile associated with the application cluster; and
based on the ranked computer configurations and second data representing a characterization of an application use, select a computer configuration from the computer configurations.

**10.** The non-transitory machine readable storage medium (900) of claim 9, wherein the storage medium stores instructions that, when executed by the machine, cause the machine to:

determine a first ranked list of the computer configurations based on the ranked computer configurations and the application use;
rank the computer configurations based on a budget to provide a second ranked list of computer configurations;
combine the first ranked list and the second ranked list to provide third data representing a third ranked list of the computer configurations; and
select the computer configurations form the third ranked list of computer configurations.

11. The non-transitory machine readable storage medium (900) of claim 10, wherein the storage medium stores instructions that, when executed by the machine, cause the machine to:
weight the plurality of computer configurations based on the budget to provide the second ranked list of computer configurations.

12. The non-transitory machine readable storage medium (900) of claim 10, wherein the storage medium stores instructions that, when executed by the machine, cause the machine to:
assign different weights to the first ranked list and the second ranked list and combine the first ranked list and the second ranked list based on the weightings.

13. An apparatus (1000) comprising:

a processor (1010); and
a memory (1020) to store instructions (1030) that, when executed by the processor, cause the processor to:

access data representing performance profiles observed from a plurality of applications executing on a plurality of computers, wherein each performance profile is associated with an application of the plurality of applications and a computer configuration of a plurality of computer configurations;
cluster the plurality of applications based on the performance profiles to provide a plurality of application clusters, wherein a given application cluster of the plurality of clusters is associated with a group of the computer configurations and associated with a performance profile for the given application cluster;
for each computer configuration of the group of computer configurations, determine a dissimilarity score for the computer configuration based on the performance profile associated with the computer configuration and the performance profile associated with the given application cluster, wherein the dissimilarity score represents a fit between the computer configuration and the given application cluster;
rank the computer configurations of the group of computer configurations based on the dissimilarity scores; and
select a computer configuration of the computer configurations based on the ranking of the computer configurations and an application profile for the selected computer configuration.

14. The apparatus (1000) of claim 13, wherein the memory stores instructions that, when executed by the processor, causes the processor to, determine the dissimilarity score for a given computer configuration based on a z-test statistic based on the performance profile associated with the given application cluster and the performance profile associated with the given computer configuration.

15. The apparatus (1000) of claim 14, wherein:
the instructions, when executed by the processor, cause the processor to provide an output representing a fitness of a characteristic of the selected computer configuration versus an ideal computer configuration based on one the dissimilarity scores.

**Patentansprüche**

1. Verfahren (800), das Folgendes umfasst:

Clustern (804) einer Vielzahl von Anwendungen, die auf einer Vielzahl von Computern auf der Basis einer Vielzahl von Nutzungsmetriken ausgeführt werden, die den Ausführungen der Anwendungen zugeordnet sind, um eine Vielzahl von Anwendungscluster bereitzustellen, wobei die Computer einer Vielzahl von Computerkonfigurationen zugeordnet sind, und ein bestimmter Anwendungscluster der Vielzahl von Anwendungsclustern einer Gruppe der Nutzungsmetriken zugeordnet ist;
für einen gegebenen Anwendungscluster der Vielzahl von Anwendungsclustern, Bestimmen (808) eines Satzes von Computerkonfigurationen der Vielzahl von Computerkonfigurationen, die durch den gegebenen Anwendungscluster dargestellt werden;
Einstufen (812) des Satzes von Computerkonfigurationen auf der Basis einer Verteilung der Gruppe von Nutzungsmetriken und einer Verteilung einer Teilmenge der Gruppe von Nutzungsmetriken, die jeder Computerkonfiguration des Satzes von Computerkonfigurationen zugeordnet sind; und
auf der Basis eines Anwendungsprofils und des Einstufens der Computerkonfigurationen, Auswählen (816) einer Computerkonfiguration.

2. Verfahren (800) nach Anspruch 1, wobei das Anwendungsprofil eine Liste von Anwendungen der Vielzahl von Anwendungen umfasst, die mit der ausgewählten Computerkonfiguration verwendet werden sollen.

3. Verfahren (800) nach Anspruch 2, wobei:

   das Anwendungsprofil eine Anordnung der Anwendungen der Liste angibt; und
   ein Auswählen der Computerkonfiguration ein Auswählen der Computerkonfiguration auf der Basis der Anordnung umfasst.

4. Verfahren (800) nach Anspruch 3, wobei ein Auswählen der Computerskonfiguration ferner Folgendes umfasst:

   Auswählen von Anwendungsclustern aus der Vielzahl von Anwendungsclustern, die die Anwendungen der Liste enthalten;
   Bestimmen von Computerkonfigurationseinstufungen für jeden der ausgewählten Anwendungscluster;
   Gewichten der bestimmten Computerkonfigurationseinstufungen auf der Basis der Anordnung, die durch das Anwendungsprofil angegeben ist; und
   Kombinieren der gewichteten bestimmten Computerkonfigurationseinstufungen.

5. Verfahren (800) nach Anspruch 1, wobei ein Einstufen des Satzes von Computerkonfigurationen Folgendes umfasst:

   für jede Computerkonfiguration Bestimmen einer Z-Test-Statistik auf der Basis der Verteilung der Gruppe der Nutzungsmetriken und der Verteilung der Teilmenge der Nutzungsmetriken, die der Computerkonfiguration zugeordnet sind; und
   Einstufen des Satzes von Computerkonfigurationen auf der Basis der Z-Test-Statistik.

6. Verfahren (800) nach Anspruch 1, wobei ein Bestimmen des Satzes von Computerkonfigurationen, die durch den gegebenen Anwendungscluster dargestellt werden, Folgendes umfasst:

   für eine gegebene Computerkonfiguration der Vielzahl von Computerkonfigurationen, Identifizieren einer Anzahl von Anwendungen des Anwendungsclusters, die der gegebenen Computerkonfiguration zugeordnet sind; und
   Bestimmen, ob die gegebene Computerkonfiguration durch den gegebenen Anwendungscluster auf der Basis der Zahl dargestellt wird.

7. Verfahren (800) nach Anspruch 1, wobei die Nutzungsmetriken Metriken umfassen, die mindestens eines von einer Prozessornutzung, einer Memory-Nutzung und einer Speichernutzung darstellen.

8. Verfahren (800) nach Anspruch 1, wobei:

   die Vielzahl von Computerkonfigurationen einem Preisbereich zugeordnet sind; und
   ein Auswählen der Computerkonfiguration ferner ein Auswählen der Computerkonfiguration auf der Basis von einer Auswahl einer Teilmenge von Preisbereichen umfasst.

9. Nichtflüchtiges maschinenlesbares Speichermedium (900), um Anweisungen (904) zu speichern, die, wenn sie durch eine Maschine ausgeführt werden, die Maschine zu Folgendem veranlassen:

   Zugreifen auf erste Daten, die Leistungsprofile darstellen, die von einer Vielzahl von Anwendungen beobachtet werden, die auf einer Vielzahl von Computern ausgeführt werden, wobei jedes Leistungsprofil einer Anwendung der Vielzahl von Anwendungen und einer Computerkonfiguration einer Vielzahl von Computerkonfigurationen zugeordnet ist;
   Gruppieren der Vielzahl von Anwendungen auf der Basis der Leistungsprofile in Anwendungscluster, wobei jeder Anwendungscluster einem Satz der Computerkonfigurationen zugeordnet sind und einem Leistungsprofil für den Anwendungscluster zugeordnet ist;
   Einstufen der Computerkonfigurationen, die jedem Anwendungscluster auf der Basis von Ähnlichkeiten zwischen den Leistungsprofilen, die den Computerkonfigurationen zugeordnet sind, und dem Leistungsprofil, das dem Anwendungscluster zugeordnet ist, zugeordnet sind; und

auf der Basis der eingestuften Computerkonfigurationen und zweiten Daten, die eine Charakterisierung einer Anwendungsnutzung darstellen, Auswählen einer Computerkonfigurationen aus den Computerkonfigurationen.

**10.** Nichtflüchtiges maschinenlesbares Speichermedium (900) nach Anspruch 9, wobei das Speichermedium Anweisungen speichert, die, wenn sie durch die Maschine ausgeführt werden, die Maschine zu Folgendem veranlassen:

Bestimmen einer als erste eingestuften Liste der Computerkonfigurationen auf der Basis der eingestuften Computerkonfigurationen und der Anwendungsnutzung;

Einstufen der Computerkonfigurationen auf der Basis eines Budgets, um eine als zweite eingestufte Liste von Computerkonfigurationen bereitzustellen;

Kombinieren der als erste eingestuften Liste und der als zweite eingestuften Liste, um dritte Daten bereitzustellen, die eine als dritte eingestufte Liste der Computerkonfigurationen darstellen; und

Auswählen der Computerkonfigurationen aus der als dritte eingestuften Liste von Computerkonfigurationen.

**11.** Nichtflüchtiges maschinenlesbares Speichermedium (900) nach Anspruch 10, wobei das Speichermedium Anweisungen speichert, die, wenn sie durch die Maschine ausgeführt werden, die Maschine zu Folgendem veranlassen: Gewichten der Vielzahl von Computerkonfigurationen auf der Basis des Budgets, um die als zweite eingestufte Liste von Computerkonfigurationen bereitzustellen.

**12.** Nichtflüchtiges maschinenlesbares Speichermedium (900) nach Anspruch 10, wobei das Speichermedium Anweisungen speichert, die, wenn sie durch die Maschine ausgeführt werden, die Maschine zu Folgendem veranlassen: Zuweisen unterschiedlicher Gewichtungen an die als erste eingestufte Liste und die als zweite eingestufte Liste und Kombinieren der als erste eingestufte Liste und der als zweite eingestufte Liste auf der Basis der Gewichtungen.

**13.** Vorrichtung (1000), die Folgendes umfasst:

einen Prozessor (1010); und

ein Memory (1020), um Anweisungen (1030) zu speichern, die, wenn sie durch den Prozessor ausgeführt werden, den Prozessor zu Folgendem veranlassen:

Zugreifen auf Daten, die Leistungsprofile darstellen, die von einer Vielzahl von Anwendungen beobachtet werden, die auf einer Vielzahl von Computern ausgeführt werden, wobei jedes Leistungsprofil einer Anwendung der Vielzahl von Anwendungen und einer Computerkonfiguration einer Vielzahl von Computerkonfigurationen zugeordnet ist;

Clustern der Vielzahl von Anwendungen auf der Basis der Leistungsprofile, um eine Vielzahl von Anwendungscluster bereitzustellen, wobei ein gegebener Anwendungscluster der Vielzahl von Clustern einer Gruppe der Computerkonfigurationen zugeordnet und einem Leistungsprofil für den gegebenen Anwendungscluster zugeordnet ist;

für jede Computerkonfiguration der Gruppe von Computerkonfigurationen, Bestimmen einer Unähnlichkeitsbewertung für die Computerkonfiguration auf der Basis des Leistungsprofils, das der Computerkonfiguration zugeordnet ist, und dem Leistungsprofil, das dem gegebenen Anwendungscluster zugeordnet ist, wobei die Unähnlichkeitsbewertung eine Übereinstimmung zwischen der Computerkonfiguration und dem gegebenen Anwendungscluster darstellt;

Einstufen der Computerkonfigurationen der Gruppe von Computerkonfigurationen auf der Basis der Unähnlichkeitsbewertungen; und

Auswählen einer Computerkonfiguration der Computerkonfigurationen auf der Basis der Einstufung der Computerkonfigurationen und eines Anwendungsprofils für die ausgewählte Computerkonfiguration.

**14.** Vorrichtung (1000) nach Anspruch 13, wobei das Memory Anweisungen speichert, die, wenn sie durch den Prozessor ausgeführt werden, den Prozessor veranlassen, die Unähnlichkeitsbewertung für eine gegebene Computerkonfiguration auf der Basis einer Z-Test-Statistik auf der Basis des Leistungsprofils, das dem gegebenen Anwendungscluster zugeordnet ist, und des Leistungsprofils zu bestimmen, das der gegebenen Computerkonfiguration zugeordnet ist.

**15.** Vorrichtung (1000) nach Anspruch 14, wobei:
die Anweisungen, wenn sie durch den Prozessor ausgeführt werden, den Prozessor veranlassen, eine Ausgabe bereitzustellen, die eine Eignung einer Eigenschaft der ausgewählten Computerkonfiguration gegenüber einer idealen Computerkonfiguration auf der Basis einer der Unähnlichkeitsbewertungen darstellt.

**Revendications**

1. Procédé (800) comprenant :

   la mise en grappe (804) d'une pluralité d'applications s'exécutant sur une pluralité d'ordinateurs sur la base d'une pluralité de mesures d'utilisation associées aux exécutions des applications pour fournir une pluralité de grappes d'applications, les ordinateurs étant associés à une pluralité de configurations d'ordinateurs, et une grappe d'applications donnée de la pluralité de grappes d'applications étant associée à un groupe des mesures d'utilisation ;
   pour une grappe d'applications donnée de la pluralité de grappes d'applications, la détermination (808) d'un ensemble de configurations d'ordinateurs de la pluralité de configurations d'ordinateurs représentées par la grappe d'applications donnée ;
   le classement (812) de l'ensemble de configurations d'ordinateurs sur la base d'une distribution du groupe de mesures d'utilisation et d'une distribution d'un sous-ensemble du groupe de mesures d'utilisation associées à chaque configuration d'ordinateurs de l'ensemble de configurations d'ordinateurs ; et
   sur la base d'un profil d'application et du classement des configurations d'ordinateurs, la sélection (816) d'une configuration d'ordinateurs.

2. Procédé (800) selon la revendication 1, dans lequel le profil d'application comprend une liste d'applications de la pluralité d'applications à utiliser avec la configuration d'ordinateurs sélectionnée.

3. Procédé (800) selon la revendication 2, dans lequel :

   le profil d'application indique une ordination des applications de la liste ; et
   la sélection de la configuration d'ordinateurs comprend la sélection de la configuration d'ordinateurs sur la base de l'ordination.

4. Procédé (800) selon la revendication 3, dans lequel la sélection de la configuration d'ordinateurs comprend en outre :

   la sélection des grappes d'applications de la pluralité de grappes d'applications qui contiennent les applications de la liste ;
   la détermination de classements de configuration d'ordinateurs pour chacune des grappes d'applications sélectionnées ;
   la pondération des classements de configuration d'ordinateurs déterminés sur la base de l'ordination indiquée par le profil d'application ; et
   la combinaison des classements de configuration d'ordinateurs déterminés et pondérés.

5. Procédé (800) selon la revendication 1, dans lequel le classement de l'ensemble de configurations d'ordinateurs comprend :

   pour chaque configuration d'ordinateurs, la détermination d'une statistique de test z sur la base de la distribution du groupe des mesures d'utilisation et la distribution du sous-ensemble des mesures d'utilisation associées à la configuration d'ordinateurs ; et
   le classement de l'ensemble de configurations d'ordinateurs sur la base de la statistique de test z.

6. Procédé (800) selon la revendication 1, dans lequel la détermination de l'ensemble de configurations d'ordinateurs représentées par la grappe d'applications donnée comprend :

   pour une configuration d'ordinateurs donnée de la pluralité de configurations d'ordinateurs, l'identification d'un certain nombre d'applications de la grappe d'applications associées à la configuration d'ordinateurs donnée ; et
   la détermination du fait que la configuration d'ordinateurs donnée est représentée par la grappe d'applications donnée sur la base du nombre.

7. Procédé (800) selon la revendication 1, dans lequel les mesures d'utilisation comprennent des mesures représentant l'utilisation du processeur et/ou l'utilisation de la mémoire et/ou l'utilisation du stockage.

**8.** Procédé (800) selon la revendication 1, dans lequel :

la pluralité de configuration d'ordinateurs est associée à une fourchette de prix ; et
la sélection de la configuration d'ordinateurs comprend en outre la sélection de la configuration d'ordinateurs sur la base d'une sélection d'un sous-ensemble de fourchette de prix.

**9.** Support de stockage non transitoire lisible par machine (900) permettant de stocker des instructions (904) qui, lorsqu'elles sont exécutées par une machine, amènent la machine à :

accéder à des premières données représentant des profils de performance observés à partir d'une pluralité d'applications s'exécutant sur une pluralité d'ordinateurs, chaque profil de performance étant associé à une application de la pluralité d'applications et à une configuration d'ordinateurs d'une pluralité de configurations d'ordinateurs ;
regrouper la pluralité d'applications sur la base des profils de performance en grappes d'applications, chaque grappe d'applications étant associée à un ensemble de configurations d'ordinateurs et associée à un profil de performance pour la grappe d'applications ;
classer les configurations d'ordinateurs associées à chaque grappe d'applications sur la base des similitudes entre les profils de performance associés aux configurations d'ordinateurs et le profil de performance associé à la grappe d'applications ; et
sur la base des configurations d'ordinateurs classées et de secondes données représentant une caractérisation d'une utilisation d'application, sélectionner une configuration d'ordinateurs parmi les configurations d'ordinateurs.

**10.** Support de stockage non transitoire lisible par machine (900) selon la revendication 9, dans lequel le support de stockage stocke des instructions qui, lorsqu'elles sont exécutées par la machine, amènent la machine à :

déterminer une première liste classée des configurations d'ordinateurs sur la base des configurations d'ordinateurs classées et de l'utilisation de l'application ;
classer les configurations d'ordinateurs sur la base d'un budget pour fournir une deuxième liste classée de configurations d'ordinateurs ;
combiner la première liste classée et la deuxième liste classée pour fournir des troisièmes données représentant une troisième liste classée des configurations d'ordinateurs ; et
sélectionner les configurations d'ordinateurs dans la troisième liste classée de configurations d'ordinateurs.

**11.** Support de stockage non transitoire lisible par machine (900) selon la revendication 10, dans lequel le support de stockage stocke des instructions qui, lorsqu'elles sont exécutées par la machine, amènent la machine à :
pondérer la pluralité de configurations d'ordinateurs sur la base du budget pour fournir la deuxième liste classée de configurations d'ordinateurs.

**12.** Support de stockage non transitoire lisible par machine (900) selon la revendication 10, dans lequel le support de stockage stocke des instructions qui, lorsqu'elles sont exécutées par la machine, amènent la machine à :
attribuer des pondérations différentes à la première liste classée et à la deuxième liste classée et combiner la première liste classée et la deuxième liste classée sur la base des pondérations.

**13.** Appareil (1000) comprenant :

un processeur (1010) ; et
une mémoire (1020) pour stocker des instructions (1030) qui, lorsqu'elles sont exécutées par le processeur, amènent le processeur à :

accéder à des données représentant des profils de performance observés à partir d'une pluralité d'applications s'exécutant sur une pluralité d'ordinateurs, chaque profil de performance étant associé à une application de la pluralité d'applications et à une configuration d'ordinateurs d'une pluralité de configurations d'ordinateurs ;
mettre en grappe la pluralité d'applications sur la base des profils de performance pour fournir une pluralité de grappes d'applications, une grappe d'applications donnée de la pluralité de grappes étant associée à un groupe des configurations d'ordinateurs et associée à un profil de performance pour la grappe d'applications donnée ;

pour chaque configuration d'ordinateurs du groupe de configurations d'ordinateurs, déterminer un score de dissemblance pour la configuration d'ordinateurs sur la base du profil de performance associé à la configuration d'ordinateurs et du profil de performance associé à la grappe d'applications donnée, le score de dissemblance représentant un ajustement entre la configuration d'ordinateurs et la grappe d'application donnée ;

classer les configurations d'ordinateurs du groupe de configurations d'ordinateurs sur la base des scores de dissemblance ; et

sélectionner une configuration d'ordinateurs parmi les configurations d'ordinateurs sur la base du classement des configurations d'ordinateurs et un profil d'application pour la configuration d'ordinateurs sélectionnée.

14. Appareil (1000) selon la revendication 13, dans lequel la mémoire stocke des instructions qui, lorsqu'elles sont exécutées par le processeur, amènent le processeur à déterminer le score de dissemblance pour une configuration d'ordinateurs donnée sur la base d'une statistique de test z basée sur le profil de performance associé à la grappe d'applications donnée et le profil de performance associé à la configuration d'ordinateurs donnée.

15. Appareil (1000) selon la revendication 14, dans lequel :
les instructions, lorsqu'elles sont exécutées par le processeur, amènent le processeur à fournir une sortie représentant un ajustement d'une caractéristique de la configuration d'ordinateurs sélectionnée par rapport à une configuration d'ordinateurs idéale sur la base de l'un des scores de dissemblance.

FIG. 1

**APPLICATION USAGE-BASED CLUSTERING ENGINE**

100

110

126 PROCESSOR

DATA REPOSITORY

SNAPSHOT DATA

131 [ I ] MEMORY

129

114

128 APPLICATION CLUSTERING

132 DISSIMILARITY SCORE DETERMINATION

129

CLUSTER

120

136

COMPUTER CONFIGURATION RANKING

**COMPUTER MODEL RECOMMENDATION ENGINE**

152

150 APPLICATION PROFILE

BUDGET

149 GUI

158

MERGE AND SORT COMPUTER MODEL RANKING

160 OUTPUT REPRESENTING SELECTED COMPUTER MODEL

**COMPUTER SYSTEM**

140

EP 3 692 437 B1

—200

○APP 1   —129
   ○APP 9   —129-1
  ○APP 3
  APPLICATION
  CLUSTER

○APP 5   —129
   ○APP 2   —129-3
  ○APP 8
  APPLICATION
  CLUSTER

○APP 4   —129
   ○APP 6   —129-2
  ○APP 7
  APPLICATION
  CLUSTER

FIG. 2

FIG. 3

FIG. 4

FIG. 5

FIG. 6

FIG. 7

EP 3 692 437 B1

800

( START )

804 — CLUSTER PLURALITY OF APPLICATIONS EXECUTING ON PLURALITY OF COMPUTERS BASED ON PLURALITY OF USAGE METRICS ASSOCIATED WITH EXECUTIONS TO PROVIDE PLURALITY OF APPLICATION CLUSTERS, WHERE COMPUTERS ARE ASSOCIATED WITH PLURALITY OF COMPUTER CONFIGURATIONS AND GIVEN APPLICATION CLUSTER IS ASSOCIATED WITH GROUP OF USAGE METRICS

808 — FOR GIVEN APPLICATION CLUSTER, DETERMINE SET OF COMPUTER CONFIGURATIONS REPRESENTED BY GIVEN APPLICATION CLUSTER

812 — RANK SET OF COMPUTER CONFIGURATIONS BASED ON DISTRIBUTION OF GROUP OF USAGE METRICS AND DISTRIBUTION OF A SUBSET OF GROUP OF USAGE METRICS ASSOCIATED WITH EACH COMPUTER CONFIGURATION

816 — BASED ON APPLICATION PROFILE AND RANKING OF COMPUTER MODELS, SELECT COMPUTER CONFIGURATION

( END )

FIG. 8

—900

—904

-ACCESS FIRST DATA REPRESENTING PERFORMANCE
 PROFILES OBSERVED FROM PLURALITY OF APPLICATIONS
 EXECUTING ON PLURALITY OF COMPUTERS, WHERE EACH
 PERFORMANCE PROFILE IS ASSOCIATED WITH
 APPLICATION AND COMPUTER MODEL

-GROUP PLURALITY OF APPLICATIONS BASED ON
 PERFORMANCE PROFILES, WHERE EACH APPLICATION
 GROUP IS ASSOCIATED WITH SET OF THE COMPUTER
 MODELS AND ASSOCIATED WITH PERFORMANCE PROFILE
 FOR APPLICATION GROUP

-RANK COMPUTER MODELS ASSOCIATED WITH EACH
 APPLICATION GROUP BASED ON SIMILARITIES BETWEEN
 PERFORMANCE PROFILES ASSOCIATED WITH COMPUTER
 MODELS AND PERFORMANCE PROFILE ASSSOCIATED WITH
 APPLICATION GROUP

-BASED ON RANKED COMPUTER MODELS AND SECOND
 DATA REPRESENTING A CHARACTERIZATION OF
 APPLICATION USE, SELECT COMPUTER MODEL

MACHINE READABLE INSTRUCTIONS EXECUTED BY MACHINE

NON-TRANSITORY MACHINE READABLE STORAGE MEDIUM

FIG. 9

INSTRUCTIONS ⌐1030

MEMORY ⌐1020

PROCESSOR

-ACCESS DATA REPRESENTING PERFORMANCE PROFILES OBSERVED FROM PLURALITY OF APPLICATIONS EXECUTING ON PLURALITY OF COMPUTERS, WHERE EACH PERFORMANCE PROFILE IS ASSOCIATED WITH APPLICATION AND COMPUTER MODEL

-CLUSTER PLURALITY OF APPLICATIONS BASED ON PERFORMANCE PROFILES TO PROVIDE PLURALITY OF APPLICATION CLUSTERS, WHERE GIVEN APPLICATION CLUSTER IS ASSOCIATED WITH GROUP OF COMPUTER MODELS AND ASSOCIATED WITH PERFORMANCE PROFILE FOR GIVEN APPLICATION GROUP

-FOR EACH COMPUTER MODEL OF GROUP OF COMPUTER MODELS, DETERMINE DISSIMILARITY SCORE FOR COMPUTER MODEL BASED ON PERFORMANCE PROFILE ASSOCIATED WITH COMPUTER MODEL AND PERFORMANCE PROFILE ASSOCIATED WITH GIVEN APPLICATION GROUP, WHERE DISSIMILARITY SCORE REPRESENTS FIT BETWEEN COMPUTER MODEL AND GIVEN APPLICATION GROUP

-RANK COMPUTER MODELS FOR EACH GROUP OF COMPUTER MODELS BASED ON DISSIMILARITY SCORES

-SELECT COMPUTER MODEL BASED ON RANKING OF COMPUTER MODELS AND APPLICATION PROFILE

1000

1010

APPARATUS

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140351412 A
- WO 2017039627 A
- US 20160042285 A
- US 7917954 B